Europäisches Patentamt

(19) European Patent Office

Office européen des brevets

(11) EP 0 713 844 B1

(12) FASCICULE DE BREVET EUROPEEN

(45) Date de publication et mention
de la délivrance du brevet:
20.10.1999 Bulletin 1999/42

(51) Int. Cl.$^6$: C03B 37/012, C03B 37/028

(21) Numéro de dépôt: 95402638.1

(22) Date de dépôt: 22.11.1995

(54) **Procédé de fabrication d'une fibre optique muticoeurs, préforme multicoeurs et fibre optique multicoeurs obtenues par ce procédé**

Verfahren zum Herstellen ein Mehrkern optische Faser, Multikern Vorform und Multikern optischer Faser nach diesem Verfahren hergestellt

Method for making a multi-core optical fiber, multi-core preform and multi-core optical fiber made by this method

(84) Etats contractants désignés:
DE DK FR GB IT NL

(30) Priorité: 24.11.1994 FR 9414102

(43) Date de publication de la demande:
29.05.1996 Bulletin 1996/22

(73) Titulaire: ALCATEL
75008 Paris (FR)

(72) Inventeurs:
 • Chesnoy, Jose
   F-75014 Paris (FR)
 • Brehm, Claude
   F-92120 Montrouge (FR)
 • Boniort, Jean-Yves
   F-91470 Limours (FR)
 • Sansonetti, Pierre
   F-91120 Palaiseau (FR)
 • Tardy, Andre
   F-91520 Egly (FR)

(74) Mandataire:
Buffière, Michelle et al
COMPAGNIE FINANCIERE ALCATEL
Dépt. Propriété Industrielle,
30, avenue Kléber
75116 Paris (FR)

(56) Documents cités:
EP-A- 0 101 742          DE-A- 1 900 246
US-A- 3 455 666          US-A- 4 127 398
US-A- 4 551 162

**Description**

La présente invention concerne un procédé de fabrication d'une fibre optique multicoeurs.

On entend par fibre optique multicoeurs une fibre optique comprenant une pluralité de coeurs optiques parallèles les uns aux autres et noyés dans une gaine optique commune, la majorité des rayons lumineux transmis par la fibre multicoeurs étant guidée dans ses coeurs. De manière classique, chaque coeur de la fibre multicoeurs a un diamètre de quelques microns (7 à 10 $\mu$m en général) et est disposé par exemple sur un cercle de rayon environ égal à 40 $\mu$m à l'intérieur de la gaine optique, celle-ci ayant un diamètre extérieur standard de 125 $\mu$m.

Afin d'assurer les propriétés souhaitées de guidage, les coeurs optiques sont en général constitués d'un matériau à base de silice dopée de manière à élever son indice de réfraction par rapport à celui de la silice pure, alors que la gaine optique est constituée d'un matériau à base de silice sensiblement pure ou légèrement dopée pour abaisser son indice de réfraction par rapport à celui du coeur.

Une des exigences majeures lors de la réalisation de fibres optiques multicoeurs est le positionnement précis des coeurs les uns par rapport aux autres. En effet, c'est ce positionnement précis qui permet d'effectuer des raccordements sûrs et d'éviter des couplages parasites entre les signaux transmis par les différents coeurs (diaphotie). Il faut ainsi notamment maintenir un espacement minimal entre les différents coeurs. On considère qu'un espacement d'environ 40 $\mu$m est la limite inférieure au-delà de laquelle le phénomène de diaphotie n'est plus tolérable.

L'une des méthodes envisagées actuellement pour fabriquer une fibre optique multicoeurs, décrite dans le document EP-A-0 101 742, consiste à partir d'une pluralité de préformes de fibres optiques à un seul coeur, dites préformes monocoeurs, comprenant un barreau de coeur entouré d'une couche de gaine, et à insérer ces barreaux dans un tube de verre, de manière à réaliser une préforme multicoeurs.

On installe alors cette préforme multicoeurs sur une installation de fibrage, et l'on procède au fibrage comme pour une préforme de fibre monocoeur, à une température de l'ordre de 2000°C tout en évacuant l'air présent dans les interstices à l'intérieur du tube, entre ce dernier et les préformes monocoeurs, par le haut de la préforme multicoeurs. On obtient ainsi la fibre multicoeurs souhaitée.

Cette méthode n'est pas satisfaisante car le positionnement des préformes monocoeurs à l'intérieur du tube est peu précis, de sorte que, dans la fibre multicoeurs obtenue, les coeurs ne sont pas positionnés précisément les uns par rapport aux autres. Ainsi, pour une fibre multicoeurs à 7 coeurs (un coeur au centre et six coeurs périphériques), l'erreur sur le positionnement des coeurs est de l'ordre de $\pm 2k\Delta R$, où $\Delta R$ est l'écart entre le diamètre réel et le diamètre nominal des préformes monocoeurs, et k le rapport d'homothétie du fibrage. Dans un cas classique où $\Delta R$ est égal à 0,3 mm et k à $5.10^{-3}$, l'erreur sur le positionnement des coeurs est de l'ordre de $\pm 3$ $\mu$m.

Un autre problème lié à cette méthode provient de l'utilisation du tube entourant l'ensemble des préformes monocoeurs. Ce tube augmente le diamètre extérieur de la préforme multicoeurs ; or la fibre multicoeurs obtenue par fibrage de la préforme multicoeurs doit avoir un diamètre extérieur standard de 125 $\mu$m. Ainsi, du fait du tube, l'espacement entre les coeurs dans la fibre multicoeurs est inférieur à l'espacement minimal requis, ce qui accroît les problèmes de diaphotie.

La présente invention a pour but de remédier à ces problèmes en mettant au point un procédé de fabrication d'une fibre optique multicoeurs qui permette d'obtenir un positionnement précis des coeurs les uns par rapport aux autres ainsi que l'espacement minimal requis entre ces derniers.

La présente invention propose à cet effet un procédé de fabrication d'une fibre optique multicoeurs, comprenant les opérations suivantes :

- assemblage d'une pluralité de préformes de fibres optiques monocoeurs sensiblement identiques, dites préformes monocoeurs, comprenant chacune un barreau de coeur entouré d'une couche de gaine optique, pour former une préforme dite multicoeurs,
- fibrage de ladite préforme multicoeurs pour obtenir ladite fibre optique multicoeurs, **caractérisé en ce que** ledit assemblage consiste à rendre lesdites préformes monocoeurs solidaires les unes des autres en les soudant les unes aux autres sur tout ou partie de leur longueur au niveau de leurs lignes de tangence sans insertion de ladite préforme multicoeurs dans un tube de maintien.

En effectuant une telle solidarisation, il est possible de contrôler le positionnement des préformes monocoeurs les unes par rapport aux autres, et en particulier de contrôler la position des axes de chacune des préformes par rapport à l'axe de symétrie de la préforme multicoeurs, de sorte que la précision du positionnement des coeurs de la fibre multicoeurs est nettement meilleure que dans l'art antérieur. L'erreur de positionnement avec le procédé de l'invention est de l'ordre de $\pm k\Delta R$, soit, dans l'exemple numérique donné dans le cas de l'art antérieur, $\pm 1,5$ $\mu$m. On obtient donc, grâce à l'invention, une diminution de moitié de l'erreur de positionnement des coeurs dans la fibre multicoeurs.

De plus, la solidarisation des préformes monocoeurs entre elles évite l'utilisation d'un tube de maintien, et permet donc d'obtenir après fibrage l'espacement minimal requis entre les coeurs, ce qui évite les problèmes de diaphotie.

De manière avantageuse, on peut procéder, avant de rendre les préformes monocoeurs solidaires les unes des autres, à une opération de polissage de ces dernières permettant d'effectuer un ajustement du centrage de leurs coeurs. Ceci permet d'accroître encore la précision du positionnement.

Selon un perfectionnement, le vide est effectué dans la préforme multicoeurs préalablement au fibrage, et la préforme multicoeurs dans lequel le vide a été réalisé est scellée de manière à maintenir ce vide durant le fibrage.

De manière très avantageuse, la préforme multicoeurs peut comprendre une pluralité de tiges en un matériau vitreux, dites tiges extérieures, chacune soudée entre deux préformes monocoeurs voisines situées à la périphérie de la préforme multicoeurs, de manière à effectuer des pontages entre les préformes monocoeurs périphériques.

Le diamètre des tiges extérieures peut être tel que le diamètre du cercle circonscrit à la préforme multicoeurs n'excède pas celui du cercle circonscrit à l'assemblage des préformes monocoeurs.

Avantageusement encore, des tiges en un matériau vitreux, dites tiges intérieures, peuvent être insérées dans les interstices laissés libres entre les préformes monocoeurs.

Une pièce de verre servant d'amorce de fibrage peut prolonger l'une des extrémités de la préforme multicoeurs. Cette amorce peut être constituée d'une pièce de verre solidarisée à l'extrémité de la préforme multicoeurs, ou bien par le prolongement de l'une des préformes monocoeurs appartenant à la préforme multicoeurs.

D'autres caractéristiques et avantages de la présente invention apparaîtront dans la description suivante d'un mode de réalisation du procédé selon l'invention, donné à titre illustratif et nullement limitatif.

Dans les figures suivantes :

- la figure 1 est une vue de côté d'un assemblage de préformes monocoeurs solidarisées les unes aux autres selon l'invention,
- la figure 2 est une coupe selon la ligne II-II de la figure 1,
- la figure 3 est une vue de côté d'une préforme multicoeurs selon l'invention prête à être fibrée,
- la figure 4 est une vue en coupe transversale d'une variante de préforme multicoeurs selon l'invention.

Dans toutes ces figures, les éléments communs portent les mêmes numéros de référence.

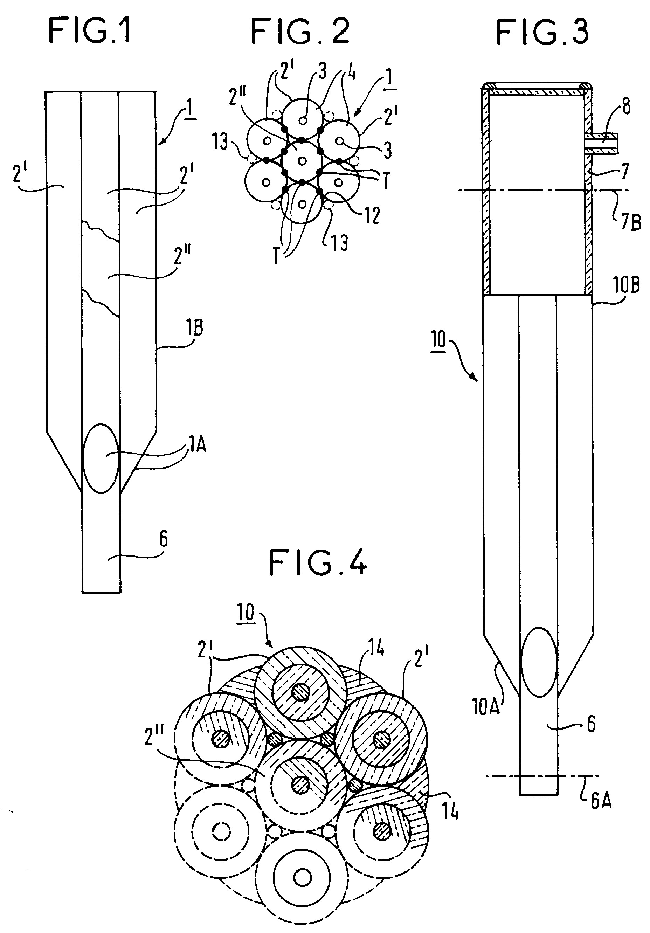

On voit aux figures 1 et 2 un assemblage 1 de sept préformes monocoeurs dans lequel six préformes dites extérieures 2' entourent une préforme dite centrale 2". Chaque préforme monocoeur 2', 2", obtenue par exemple par la méthode MCVD, se compose d'un barreau de coeur 3, constitué par exemple de silice dopée au germanium et ayant un diamètre de 1,4 mm, entouré d'une couche de gaine optique 4, constituée par exemple de silice dopée au fluor de manière à diminuer son indice de réfraction par rapport à celui du barreau de coeur 3. Le diamètre de chacune des préformes monocoeurs 2', 2" est de 8 mm, et leur longueur de 200 mm au moins. La préforme centrale 2" peut être plus longue que les préformes extérieures 2' (par exemple, elle peut avoir une longueur de 400 mm) afin de faciliter le montage de l'ensemble et de servir également d'amorce de fibrage (son extrémité servant d'amorce de fibrage est référencée 6 en figure 3).

Les coeurs 3 des préformes monocoeurs 2', 2" constitueront les coeurs de la fibres multicoeurs à fabriquer.

Afin de faciliter le fibrage ultérieur, l'une des extrémités de chacune des préformes extérieures 2' peut être biseautée, de sorte qu'une extrémité 1A de l'assemblage 1 a une forme tronconique (voir figure 1).

Selon l'invention, les six préformes extérieures 2' ont été rendues solidaires les unes des autres et de la préforme centrale 2" par soudure, c'est-à-dire par fusion locale le long d'une partie de leurs lignes de tangence T dont la trace est représentée schématiquement par un point en figure 2. La fusion peut être effectuée par exemple à l'aide d'un chalumeau ou d'un laser $CO_2$ (non représentés) amenés à se déplacer le long des lignes de tangence T. Pour maintenir les préformes 2', 2" durant la fusion, on peut utiliser par exemple un mandrin de serrage à trois mors (non représenté) dans lequel chaque mors présente un vé de préhension.

Il n'est pas nécessaire que la solidarisation soit effectuée sur toute la longueur de l'assemblage 1. Elle peut par exemple être effectuée uniquement aux extrémités 1A et 1B de ce dernier.

La solidarisation permet d'assurer un positionnement précis des préformes 2', 2" les unes par rapport aux autres, en fixant et en contrôlant, avant la soudure, les positions des préformes 2', 2" les unes par rapport aux autres. Ce positionnement précis est simple à effectuer.

L'ensemble constitué par l'assemblage 1 est dénommé préforme multicoeurs et référencé 10.

Pour assurer que les interstices laissés libres entre les préformes 2' et 2" se referment bien au cours du fibrage ultérieur, ceci permettant d'obtenir une fibre multicoeurs compacte et homogène, on peut effectuer, avant le fibrage, le vide entre les préformes 2' et 2". Pour cela, on solidarise de manière étanche à l'une des extrémités 10B de la préforme 10 un tube 7 borgne, c'est-à-dire fermé à sa partie supérieure opposée à celle raccordée à la préforme 10, et ouvert latéralement au moyen d'un tube latéral 8 permettant le raccordement à des moyens de pompage (non représentés).

En raccordant les moyens de pompage au tube latéral 8, on effectue alors dans la préforme 10 un vide primaire, proche de 1 Pa, puis l'on scelle le tube 8 (par exemple au chalumeau) pour maintenir le vide dans la préforme 10.

Il est possible, de manière alternative, de réaliser le vide dans la préforme 10 durant le fibrage. Pour cela, les moyens de pompage sont raccordés au tube 8 durant le fibrage.

L'ensemble représenté en figure 3, constitué de la préforme multicoeurs 10, de l'amorce 6 et du tube borgne 7 est alors directement utilisable dans une installation de fibrage (non représentée). Il peut y être maintenu au moyen de mandrins (non représentés) au niveau d'une section inférieure 6A appartenant à l'amorce 6 et d'une section supérieure 7B appartenant au tube borgne 7.

Le fibrage a lieu de manière classique, la température de fibrage étant par exemple voisine de 2000°C, par étirage de l'extrémité inférieure 10A de la préforme multicoeurs 10 jusqu'à obtenir une fibre multicoeurs ayant les dimensions souhaitées.

Selon un perfectionnement très avantageux de l'invention, afin d'assurer une bonne cohésion et une bonne herméticité de la préforme multicoeurs 10, on peut déposer au fond de chaque vé curviligne 12 (voir figure 2) défini entre deux préformes extérieures 2' voisines de la préforme multicoeurs 10 une tige dite extérieure 13 (représentée en trait pointillé à la figure 2) en un matériau vitreux, de longueur voisine de celle des préformes monocoeurs 2', 2", et effectuer par chauffage une soudure de ces tiges 13 aux préformes 2', de manière à créer des pontages 14 entre les préformes périphériques 2' (voir figure 4). Les tiges extérieures 13 remplissent ainsi la fonction de maintien remplie par le tube dans le procédé de l'art antérieur, sans entraîner le problème lié à ce tube, c'est-à-dire la diminution de l'espacement entre coeurs de la fibre multicoeurs, puisque les tiges 13 peuvent être choisies de sorte que le diamètre du cercle circonscrit à la préforme multicoeurs 10 reste celui du cercle circonscrit à l'ensemble des préformes 2'.

Selon un perfectionnement possible, afin de réduire le volume laissé libre à l'intérieur de la préforme 10 entre les préformes 2', 2", on peut remplir les interstices laissés libres entre ces dernières par des tiges de remplissage intérieures 11 en un matériau vitreux, ainsi que représenté en figure 4.

Le procédé selon l'invention assure un meilleur positionnement des préformes monocoeurs les unes par rapport aux autres que le procédé antérieur consistant simplement à disposer librement ces dernières dans un tube.

On peut effectuer par ailleurs un repérage aisé des coeurs de la fibre optique multicoeurs obtenue en insérant une tige de remplissage colorée par exemple.

Bien entendu, la présente invention n'est pas limitée au mode de réalisation qui vient d'être décrit.

En particulier, le nombre de préformes monocoeurs constituant la préforme multicoeurs, ainsi que leurs dimensions, ne sont donnés qu'à titre d'exemple, et l'on pourra les adapter aux caractéristiques de la fibre multicoeurs souhaitée. Notamment, on pourra fabriquer selon l'invention des fibres multicoeurs à 3 ou 4 coeurs en partant de préformes multicoeurs à 3 ou 4 préformes monocoeurs. On pourra aussi fabriquer selon l'invention des préformes multicoeurs à partir de n préformes périphériques disposées autour d'un barreau central en un matériau vitreux qui n'est pas nécessairement une préforme monocoeur. Dans ce cas, le diamètre $\phi$ du barreau central en un matériau vitreux sera donné par la formule

$$\phi = \phi_p \left( \frac{1}{\sin\frac{\pi}{n}} - 1 \right) \text{ où } \phi_p \text{ est le diamètre extérieur des préformes monocoeurs.}$$

Afin d'assurer le maintien des préformes monocoeurs entre elles pendant la soudure, on peut, au lieu d'utiliser des mors de maintien, assurer une solidarisation préalable des préformes monocoeurs entre elles au niveau de leurs extrémités, par apport de silice.

Si les tolérances sur le diamètre extérieur des préformes monocoeurs sont peu serrées, c'est-à-dire si l'erreur sur leur diamètre est supérieure au dixième de millimètre, on peut effectuer le positionnement précis des préformes monocoeurs les unes par rapport aux autres à l'aide d'un calibre à trous, les trous correspondant aux coeurs des préformes monocoeurs, placé en extrémité de l'assemblage, de manière à faire coïncider les coeurs des préformes monocoeurs avec les trous du calibre, puis insérer des tiges intérieures pour combler le jeu résultant entre les préformes monocoeurs. Le reste du procédé se déroule à la manière décrite précédemment. Lorsque les tolérances sur le diamètre extérieur des préformes monocoeurs sont serrées, l'assemblage compact de ces dernières entre elles suffit pour obtenir le positionnement requis.

Par ailleurs, les tiges intérieures peuvent être solidarisées par soudure aux préformes monocoeurs. Dans ce cas, il faut procéder en plusieurs temps pour effectuer l'assemblage, c'est-à-dire souder les tiges intérieures avec les préformes intérieures, puis souder les préformes périphériques.

On peut remplacer l'extrémité de la préforme monocoeur centrale servant d'amorce de fibrage par une amorce de fibrage, sous forme de tube ou de barreau, rapportée par soudure à l'extrémité de la préforme monocoeur centrale.

Enfin, on pourra remplacer tout moyen par un moyen équivalent sans sortir du cadre de l'invention.

**Revendications**

1. Procédé de fabrication d'une fibre optique multicoeurs, comprenant les opérations suivantes :

   - assemblage d'une pluralité de préformes de fibres optiques monocoeurs sensiblement identiques, dites préformes monocoeurs (2', 2"), comprenant chacune un barreau de coeur (3) entouré d'une couche de gaine optique (4), pour former une préforme dite multicoeurs (10),
   - fibrage de ladite préforme multicoeurs (10) pour obtenir ladite fibre optique multicoeurs, caractérisé en ce que ledit assemblage consiste à rendre lesdites préformes monocoeurs (2', 2") solidaires les unes des autres en les soudant les unes aux autres sur tout ou partie de leur longueur au niveau de leurs lignes de tangence (T) sans insertion de ladite préforme multicoeurs (10) dans un tube de maintien.

2. Procédé selon la revendication 1 caractérisé en ce que, avant la solidarisation desdites préformes monocoeurs (2', 2") les unes aux autres, on procède à une opération de polissage de ces dernières permettant d'effectuer un ajustement du centrage de leurs coeurs.

3. Procédé selon l'une des revendications 1 ou 2 caractérisé en ce que le vide est effectué dans ladite préforme multicoeurs (10) préalablement audit fibrage, ladite préforme (10) dans lequel le vide a été réalisé étant scellée de manière à maintenir ce vide durant le fibrage.

4. Procédé selon l'une des revendications 1 à 3 caractérisé en ce que ladite préforme multicoeurs (10) comprend une pluralité de tiges (13) en un matériau vitreux, dites tiges extérieures, chacune desdites tiges extérieures (13) étant soudée entre deux voisines desdites préformes monocoeurs (2') situées à la périphérie de ladite préforme multicoeurs (10), de manière à effectuer des pontages (14) entre lesdites préformes monocoeurs périphériques (2').

5. Procédé selon la revendication 4 caractérisé en ce que le diamètre desdites tiges extérieures (13) est tel que le diamètre du cercle circonscrit à ladite préforme multicoeurs (10) n'excède pas celui du cercle circonscrit à l'assemblage desdites préformes monocoeurs (2', 2").

6. Procédé selon l'une des revendications 1 à 5 caractérisé en ce que des tiges (11) en un matériau vitreux, dites tiges intérieures, sont insérées dans les interstices laissés libres entre lesdites préformes monocoeurs (2', 2").

7. Procédé selon l'une des revendications 1 à 6 caractérisé en ce qu'une pièce de verre servant d'amorce de fibrage prolonge l'une des extrémités de ladite préforme multicoeurs (10).

8. Procédé selon la revendication 7 caractérisé en ce que ladite amorce est constituée d'une pièce de verre solidarisée à l'extrémité de ladite préforme multicoeurs.

9. Procédé selon la revendication 7 caractérisé en ce que ladite amorce est constituée par un prolongement (6) de l'une desdites préformes monocoeurs (2") appartenant à ladite préforme multicoeurs (10).

10. Procédé selon l'une des revendications 1 à 9 caractérisé en ce que l'une des extrémités (10A) de ladite préforme multicoeurs (10) est usinée préalablement audit fibrage de sorte qu'elle a une forme tronconique.

**Claims**

1. A method of manufacturing a multi-core optical fiber, the method including the following steps:

   assembling together a plurality of substantially identical single-core optical fiber preforms (2', 2"), referred to as "single-core preforms", each of which comprises a core bar (3) surrounded by a layer of optical cladding (4), so as to form a "multi-core preform" (10); and
   drawing down said multi-core preform (10) so as to obtain said multicore optical fiber;
   said method being characterized in that the assembly step consists in securing said single-core preforms (2', 2") to one another by fusing them over their entire lengths or over portions thereof along their tangential lines of contact (T), without inserting said multi-core preform (10) into a holding tube.

2. A method according to claim 1, characterized in that, prior to being secured to one another, said single-core preforms (2', 2") are polished so as to adjust the centering of their cores.

3. A method according to claim 1 or 2, characterized in that said multi-core preform (10) is evacuated prior to being drawn, the evacuated preform (10) being sealed off so as to maintain the vacuum during drawing.

4. A method according to any one of claims 1 to 3, characterized in that said multi-core preform (10) includes a plurality of "outer" rods (13) made of a vitreous material, each of said outer rods (13) being fused between two adjacent ones of said single-core preforms (2') situated at the periphery of said multi-core preform (10), so as to form bridges (14) between the peripheral single-core preforms (2').

5. A method according to claim 4, characterized in that the diameter of said outer rods (13) is such that the diameter of the circumscribed circle of said multi-core preform (10) does not exceed that of the circumscribed circle of the assembled-together single-core preforms (2', 2").

6. A method according to any one of claims 1 to 5, characterized in that "inner" rods (11) made of a vitreous material are inserted into the interstices left empty between said single-core preforms (2', 2").

7. A method according to any one of claims 1 to 6, characterized in that a piece of glass serving as a drawing leader extends one end of said multi-core preform (10).

8. A method according to claim 7, characterized in that said leader is constituted by a piece of glass secured to the end of said multi-core preform.

9. A method according to claim 7, characterized in that said leader is constituted by an extension (6) to one of said single-core preforms (2") belonging to said multi-core preform (10).

10. A method according to any one of claims 1 to 9, characterized in that, prior to being drawn, one end (10A) of said multi-core preform (10) is machined so that it is frustoconical in shape.

**Patentansprüche**

1. Verfahren zum Herstellen einer optischen Mehrkernfaser, folgende Schritte umfassend:

 - Zusammenfügen einer Mehrzahl von Vorformen von im wesentlichen identischen optischen Einkernfasern, als Einkern-Vorformen (2', 2") bezeichnet, die jeweils einen Kernstab (3) umgeben von einer optischen Hüllschicht (4) umfassen, um eine sogenannte Mehrkern-Vorform (10) zu bilden,
 - Ziehen der Mehrkern-Vorform (10), um die optische Mehrkernfaser zu erhalten, dadurch gekennzeichnet, daß das Zusammenfügen darin besteht, die Einkern-Vorformen (2', 2") fest miteinander zu verbinden, indem sie miteinander auf der Gesamtheit oder einem Teil ihrer Länge an ihren Berührungslinien (T) verschweißt werden, ohne die Mehrkern-Vorform (10) in ein Halterohr einzuführen.

2. Verfahren nach Anspruch 1, dadurch gekennzeichnet, daß vor dem Verbinden der Einkern-Vorformen (2', 2") miteinander ein Schritt des Polierens der letzteren durchgeführt wird, der es erlaubt, eine Justierung der Zentrierung ihrer Kerne durchzuführen.

3. Verfahren nach einem der Ansprüche 1 oder 2, dadurch gekennzeichnet, daß vor dem Ziehen in der Mehrkern-Vorform (10) ein Vakuum hergestellt wird, und die Vorform (10), in der das Vakuum hergestellt ist, versiegelt wird, um dieses Vakuum während des Ziehens zu erhalten.

4. Verfahren nach einem der Ansprüche 1 bis 3, dadurch gekennzeichnet, daß die Mehrkern-Vorform (10) eine Mehrzahl von Stangen (13) aus einem glasartigen Material umfaßt, als äußere Stangen bezeichnet, wobei jede dieser äußeren Stangen (13) zwischen zwei benachbarten der Einkern-Vorformen (2') verschweißt ist, die an der Peripherie der Mehrkern-Vorform (10) angeordnet sind, um Brücken (14) zwischen den peripheren Einkern-Vorformen (2') zu bilden.

5. Verfahren nach Anspruch 4, dadurch gekennzeichnet, daß der Durchmesser der äußeren Stangen (13) derart ist, daß der Durchmesser des Umkreises um die Mehrkern-Vorform (10) nicht größer ist als der des Umkreises um die Anordnung der Einkern-Vorformen (2', 2").

6. Verfahren nach einem der Ansprüche 1 bis 5, dadurch gekennzeichnet, daß Stangen (11) aus einem glasartigen Material, als innere Stangen bezeichnet, in die zwischen den Einkern-Vorformen (2', 2'') freigebliebenen Hohlräume eingefügt werden.

7.  Verfahren nach einem der Ansprüche 1 bis 6, dadurch gekennzeichnet, daß ein Glasstück, das als Ziehansatz dient, eines der Enden der Mehrkern-Vorform (10) verlängert.

8.  Verfahren nach Anspruch 7, dadurch gekennzeichnet, daß der Ansatz aus einem mit dem Ende der Mehrkern-Vorform fest verbundenen Glasstück besteht.

9.  Verfahren nach Anspruch 7, dadurch gekennzeichnet, daß der Ansatz aus einer Verlängerung (6) einer der zu der Mehrkern-Vorform (10) gehörenden Einkern-Vorformen (2'') besteht.

10. Verfahren nach einem der Ansprüche 1 bis 9, dadurch gekennzeichnet, daß eines der Enden (10A) der Mehrkern-Vorform (10) vor dem Ziehen bearbeitet wird, so daß es eine Kegelform hat.

# FIG.1

# FIG. 2

# FIG.3

# FIG.4